# EUROPEAN PATENT SPECIFICATION

(11) **EP 0 812 710 B1**
(45) Date of publication and mention of the grant of the patent: **22.03.2000**
(21) Application number: 97202503.5
(22) Date of filing: 11.05.1995
(51) Int. Cl.: B60C 19/08

(54) **Tyre treads and tyres incorporating them**
Reifenlauffläche und Reifen damit ausgerüstet
Bandes de roulement pour pneumatiques et bandages pneumatiques les incorporant

(30) Priority: 12.05.1994 GB 9400453
(43) Date of publication of application: 17.12.1997
(62) Divisional of application: 95303175.4
(73) Proprietor: SUMITOMO RUBBER INDUSTRIES, LTD., Hyogo-ken (JP)
(72) Inventor: Powell, Brian David William, Nuneaton, Warwickshire CV11 4TL (GB)
(74) Representative: Stewart, Charles Geoffrey

(56) References cited:
- EP-A- 0 658 452
- CH-A- 597 008
- DE-C- 820 543
- GB-A- 544 757
- GB-A- 551 657
- DATABASE WPI Week 9118 Derwent Publications Ltd., London, GB; AN 91-128812 XP002044574 & JP 03 067 705 A (BRIDGESTONE CORP.) , 22 March 1991
- PATENT ABSTRACTS OF JAPAN vol. 10, no. 342 (M-536), 19 November 1986 & JP 61 143203 A (YOKOHAMA RUBBER CO. LTD.), 30 June 1986,

## Description

This invention relates to tyres having treads and in particular treads which are electrically conducting including those reinforced by Silica.

The build-up of static electric charge in moving vehicles can have a potentially adverse effect on electronic circuitry and radio reception, as well as being a safety hazard should spark discharge occur during re-fuelling. Personal discomfort also occurs if charge is earthed through a driver or passenger.

Charge is normally conducted to earth through the tyres, which requires that the tyres themselves have an acceptable level of conductivity - commonly described as anti-static. Such levels of conductivity are normally guaranteed by the use of tyre compounds containing significant proportions of carbon black as reinforcing filler. Carbon black reduces the resistivity of the intrinsically nonconductive rubber and so provides a leakage path for the static charge from the vehicle to earth.

Anti-static rubber compounds generally require a volume resistivity below 10⁸ ohm cm, which is usually achievable with approx 50phr or more carbon black in the compound. Such loadings are typical of carbon black-reinforced tyres, which are accordingly anti-static.

If non-black fillers (e.g. silica) are used, or if the carbon black loading is significantly less than 50phr, anti-static properties are often not achieved. For example, with silica filler in place of carbon black, the volume resistivity is typically 10¹³ ohm cm. Should such a compound be used in the tread of a tyre, for example to achieve a lower rolling resistance, the vehicle will effectively be insulated from the road and static charge will not be able to leak to earth.

It is known that electrical conductivity may be improved by the addition of polar ingredients but the effect is generally of insufficient magnitude. Likewise special grades of superconductive carbon blacks may be added but these need to be present in moderately high loadings, e.g. 10-30phr, to be significantly effective, and since their other properties are not suited to tyre applications, road performance may deteriorate.

A tyre according to the preamble of Claim 1 is known from GB-A-544 757.

According to one aspect of the present invention a tyre comprises an elongated main tread strip of high resistivity tread compound having a transverse width TR characterised by a sub-tread disposed in contact with the radially inner surface of the main tread strip and two longitudinally extending conducting strip of low resistivity tyre compound having a volume resistivity of less than 10⁸ ohm-cm disposed one at each axial edge of the transverse width TR of the main tread strip, the conducting strips extending from the radially outer surface of the main tread strip to its radially inner surface to contact the sub-tread, the sub-tread extending axially over the whole transverse width TR of the main tread strip.

By high resistivity is meant tyre tread compounds having a volume resistivity greater than 10⁸ ohm cm. Such compounds include for example tyre tread compounds having a silica filler in place of carbon black of which the volume of resistivity is typically 10¹³ ohm-cm.

The conducting strips may conveniently be the tread strip wing component which in the finished tyre form the tyre tread shoulders. This construction is particularly convenient because the tyre tread wings are usually extruded of a different material to the main part of the tyre tread strip and thus no additional extruded component is necessary.

The width of each of the conducting strip is preferably in the range of 5-25% of the width of the tyre tread TR.

The compound of the conducting strip more preferably has a volume resistivity of less than 10⁶ ohm cm.

Further aspects of the present invention will become apparent from the following description, by way of example only, of one embodiment in conjunction with the attached diagrammatic drawings in which:

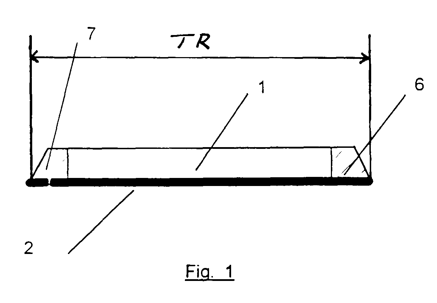

Figure 1 shows a tyre tread strip according to the present invention.

In the embodiment shown in Figure 1 high resistivity silica compound forms the center region of the tyre tread strip. A sub-tread 2 is provided and the wing portions 6 and 7 of the tyre tread strip comprise low resistivity materials.

The longitudinally extending conducting wing portions 6 and 7 comprise a rubber compound having a volume resistivity of approximately 10⁶ ohm-cm being reinforced by carbon black and having the following formulation.

| | |
|---|---|
| SBR 1712, styrene 23.5%, oil 27.3% | 96 |
| BR, 96% 1,4-cls | 30 |
| N234 Carbon Black | 80 |
| Silica Ultrasil VN3 | - |
| *TESPT/N330 1:1 (X50-S) | - |
| Zinc Oxide | 3 |
| Stearic acid | 2 |
| Aromatic oil | 10 |
| CBS | 1.5 |
| DPG | - |
| Sulfur | 1.5 |

| | |
|---|---|
| *bis [3-triethoxysilylpropyl] tetrasulfane/N330 1:1 blend marketed by Degussa as X-50S. | |

The center region is of a rubber compound reinforced by silica having a volume of resistivity approximately 10¹³ ohm-cm. The formulation of the side region tread compound is as follows.

| | |
|---|---|
| SBR 1712, styrene 23.5%, oil 27.3% | 96 |
| BR, 96% 1,4-cls | 30 |
| N234 Carbon Black | - |
| Silica Ultrasil VN3 | 80 |
| *TESPT/N330 1:1 (X50-S) | 12.8 |
| Zinc Oxide | 3 |
| Stearic acid | 2 |
| Aromatic oil | 10 |
| CBS | 1.5 |
| DPG | 2 |
| Sulfur | 1.5 |

| | |
|---|---|
| *bis [3-triethoxysilylpropyl] tetrasulfane/N330 1:1 blend marketed by Degussa as X-50S. | |

The tyre tread strip is fitted to tyre a carcass on top of a tread reinforcing breaker in the normal way and the tyre is vulcanised in a tyre curing press where the tyre tread pattern is formed.

The formulation for the conducting or low volume resistivity components is given purely by way of example only and any of the normal low resistivity formulations known in the art may be used. Likewise the formulation of the non-conducting or high volume resistivity component is given purely by way of example only and any of the high resistivity formulations known in the art may be used.

In the resultant tyre the properties of the silica reinforced tyre exist in full measure giving wear, wet grip, ice grip etc according to the silica compound formulation chosen. The disadvantage of silica compounds however in having too high a volume resistivity whereby static charge may be maintained on the vehicle so causing the problems mentioned above is overcome by the conducting paths of the low volume resistivity material provided in the tyre tread strip.

A most important advantage of the construction of the present invention however is that the strips of low resistivity material comprise extrudable sections and the tyre tread strip can be manufactured using conventional extrusion techniques bringing the various components together to form a handlable tyre tread strip. The tyre tread strip may be spooled and used in continuous lengths or cut to the required length for each tyre to be manufactured.

## Claims

1. A tyre comprising an elongated main tread strip (1) of high resistivity tread compound having a transverse width TR characterised by a sub-tread (2) disposed in contact with the radially inner surface of the main tread strip (1) and two longitudinally extending conducting strips (6,7) of low resistivity tyre compound having a volume resistivity of less than 10⁸ ohm-cm disposed one at each axial edge of the transverse width of the main tread strip (1), the conducting strips extending from the radially outer surface of the main tread strip (1) to its radially inner surface to contact the sub-tread (2), the sub-tread (2) extending axially over the whole transverse width TR of the main tread strip (1).

2. A tyre according to claim 1, characterised in that the conducting strips (6,7) are the tread wings which form the tyre tread shoulders after tyre manufacture.

3. A tyre according to either of claims 1 or 2, characterised in that the width of each conducting strip (6,7) is in the range of 5 to 25% of the width of the tyre tread.

4. A tyre according to any of claims 1 to 3, characterised in that each of the conducting strips (6,7) has a longitudinally extending tread groove formed therein.

5. A tyre according to any of claims 1 to 4, characterised in that each of the conducting strips (6,7) has a width greater than the width of the widest longitudinally extending tread groove.

6. A tyre according to any of claims 1 to 5, characterised in that the volume resistivity of the compound of the conducting strips (6,7) is less than 10⁶ ohm cm.

7. A tyre according to any of claims 1 to 6, characterised in that the high resistivity compound comprises silica as the major reinforcement or filler material.

## Patentansprüche

1. Reifen mit einem länglichen Hauptlaufflächenstreifen (1) aus einer Laufflächenmischung mit hohem spezifischen Widerstand mit einer Querbreite TR, gekennzeichnet durch ein Protektorunterteil (2), das in Kontakt mit der radial inneren Fläche des Hauptlaufflächenstreifens (1) angeordnet ist, und zwei sich in Längsrichtung erstreckende, leitfähige Streifen (6, 7) aus einer Reifenmischung mit niedrigem spezifischen Widerstand mit einem spezifischen Volumenwiderstand von weniger als 10⁸ Ohm-cm, die jeweils an jedem axialen Rand der Querbreite TR des Hauptlaufflächenstreifens (1) angeordnet sind, wobei sich der leitfähige Streifen von der radial äußeren Fläche des Hauptlaufflächenstreifens (1) zu seiner radial inneren Fläche erstreckt, so daß er mit dem Protektorunterteil (2) in Kontakt steht, wobei sich das Protektorunterteil (2) axial über die gesamte Querbreite TR des Hauptlaufflächenstreifens (1) erstreckt.

2. Reifen nach Anspruch 1, dadurch gekennzeichnet, daß die leitfähigen Streifen (6, 7) die Laufflächenflügel sind, die nach der Reifenherstellung die Laufflächenschultern des Reifens bilden.

3. Reifen nach Anspruch 1 oder Anspruch 2, dadurch gekennzeichnet, daß die Breite jedes leitfähigen Streifens (6, 7) im Bereich von 5 bis 25% der Breite der Lauffläche des Reifens liegt.

4. Reifen nach einem der Ansprüche 1 bis 3, dadurch gekennzeichnet, daß in jedem der leitfähigen Streifen (6, 7) eine sich in Längsrichtung erstreckende Laufflächenrille gebildet ist.

5. Reifen nach einem der Ansprüche 1 bis 4, dadurch gekennzeichnet, daß jeder der leitfähigen Streifen (6, 7) eine Breite aufweist, die größer als die Breite der breitesten, sich in Längsrichtung erstreckenden Laufflächenrille ist.

6. Reifen nach einem der Ansprüche 1 bis 5, dadurch gekennzeichnet, daß der spezifische Volumenwiderstand der Mischung der leitfähigen Streifen (6, 7) kleiner als 10⁶ Ohm cm ist.

7. Reifen nach einem der Ansprüche 1 bis 6, dadurch gekennzeichnet, daß die Mischung mit hohem spezifischen Widerstand Kieselsäure als die Hauptverstärkung oder das Hauptfüllmaterial umfaßt.

## Revendications

1. Pneumatique comprenant un bandage allongé (1) de bande de roulement principale d'une composition de bande de roulement de résistivité élevée ayant une largeur transversale TR, caractérisé par une bande de roulement auxiliaire (2) placée au contact de la surface radialement interne du bandage principal de bande de roulement (1) et deux bandages longitudinaux et conducteurs (6, 7) formés d'une composition de pneumatique de faible conductivité, possédant une résistivité en volume inférieure à 10⁸ Ω.cm, placé sur la largeur transversale TR du bandage (1) de la bande de roulement principale, le bandage conducteur partant de la surface radialement externe du bandage de bande de roulement principale (1) vers sa surface radialement interne pour être au contact de la bande de roulement auxiliaire (2), la bande de roulement auxiliaire (2) s'étendant axialement sur toute la largeur transversale TR du bandage (1) de la bande de roulement principale.

2. Pneumatique selon la revendication 1, caractérisé en ce que les bandages conducteurs (6, 7) sont des ailes de bande de roulement qui forment les épaulements de la bande de roulement après la confection du pneumatique.

3. Pneumatique selon la revendication 1 ou 2, caractérisé en ce que la largeur de chaque bandage conducteur est comprise entre 5 et 25 % de la largeur de la bande de roulement du pneumatique.

4. Pneumatique selon l'une quelconque des revendications 1 à 3, caractérisé en ce que chaque bandage conducteur a une gorge longitudinale de bande de roulement formée à l'intérieur.

5. Pneumatique selon l'une quelconque des revendications 1 à 4, caractérisé en ce que chaque bandage conducteur (6, 7) a une largeur supérieure à la largeur de la plus large gorge longitudinale de la bande de roulement.

6. Pneumatique selon l'une quelconque des revendications 1 à 5, caractérisé en ce que la résistivité en volume de la composition des bandages conducteurs (6, 7) est inférieure à 10⁶ Ω.cm.

7. Pneumatique selon l'une quelconque des revendications 1 à 6, caractérisé en ce que la composition de résistivité élevée contient de la silice comme matériau principal d'armature ou matériau de charge.
